(19) Europäisches Patentamt
European Patent Office
Office européen des brevets

(11) **EP 3 826 136 A1**

(12) **EUROPEAN PATENT APPLICATION**

(43) Date of publication:
**26.05.2021 Bulletin 2021/21**

(51) Int Cl.:
*H02J 7/04* (2006.01)     *B60L 58/12* (2019.01)

(21) Application number: **20206717.9**

(22) Date of filing: **10.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **15.11.2019 IT 201900021297**

(71) Applicant: **Futura Batterie S.r.l.**
**37040 Zimella (VR) (IT)**

(72) Inventors:
• **TROMBETTI, Matteo**
 **6900 Paradiso (CH)**
• **TERAZZAN, Yari**
 **36045 Lonigo (VI) (IT)**

(74) Representative: **Fabiano, Piero**
**Fabiano, Franke & MGT Sagl**
**Piazzetta San Carlo, 2**
**6900 Lugano (CH)**

(54) **METHOD OF CHARGING A STORAGE BATTERY**

(57)     Method of charging storage batteries for traction in the industrial field, where the aforesaid method comprises at least the following steps:
a) providing a storage battery (2) to be charged;
b) making an estimate of the state of initial charge of said storage battery (2);
c) charging said storage battery at constant power, by calculating said power depending on the estimate of the initial charging energy in which said storage battery (2) is and in such a way as to complete the charge in a pre-set period of time T.

Fig. 2

**EP 3 826 136 A1**

**Description**

FIELD OF THE INVENTION

The present invention refers to the field of storage batteries for traction, for example in the industrial field such as lift trucks, pallet stackers, automated guided vehicles, means for logistics inside the plants, etc.

In particular, the present invention relates to a method of charging storage batteries for traction in the industrial field.

KNOWN PRIOR ART

Typically, a battery charging device, during the charging process, supplies a storage battery with sufficient energy to return the storage battery to full charge, i.e. to SOC ("State of charge") values close to 100%.

A storage battery for traction used for lift trucks in the industrial field, is commonly used for a work shift (e.g. 8 hours). At the end of this shift, the storage battery used (batt. A) is replaced with a charged storage battery (batt. B) and the one used in the previous shift (batt. A) is charged. Alternatively, if the lift truck is not required for the next work shift, the storage battery (batt. A) is charged without being replaced. In general, therefore, in some cases you have a shift of 8 hrs. for the charge, in other cases, a shift of 16 hrs.

Being able to charge the battery in significantly shorter times is therefore generally not a great advantage appreciated by the user, who needs to have the battery charged only at the beginning of the next shift.

The Applicant noticed that typically the storage batteries are replaced on the lift truck and/or charged independently of their state of charge in which they are at the end of the previous shift. The Applicant observed that it often happens operationally that the storage batteries, at the end of the shift, are not discharged to 80% (therefore, SOC 20%), but only to 50% or 40% or even less. Typically, a standard battery charger (IUIa) delivers the ordinary current intensity until a pre-set battery voltage level is reached. In these cases, the standard battery chargers (IUIa) end the charging step more quickly than necessary.

Therefore, the Applicant observed that in current charging processes the amount of energy to be supplied to the storage battery to bring it to SOC values equal to 100% is supplied at maximum intensity (typically, the maximum intensity that can be delivered by the battery charger at the end-of-charge voltage). This results in a high amount of total energy dissipated and a high temperature at which the storage battery operates and, consequently, an increase in the ageing rate of the same storage battery.

The Applicant also observed that the current charging processes are characterised by a high charge rate, not necessarily required. In most cases, storage batteries for traction in the industrial field have a full or two full work shifts (typically, 8 hours each) to recharge. A high charging speed results in a lower completeness of the level of charge of the same storage battery.

This is related to the so-called "Peukert's effect", which explains the ability of a battery to store and release more energy when it is charged more slowly. Such effect is much more marked for lead batteries than for lithium batteries. In other words, the ability to store electrical energy of a battery is not a condition that depends solely on the characteristics of the battery, but also on the current intensity at which it is charged. Such phenomenon is studied above all for lead batteries and is modelled by the following formula:

$$Cp = I^k * t,$$

where

- K is the Peukert's constant, which varies according to the type of battery (for example, ideal battery K=1; AGM: 1.08-1.15; Lead Gel 1.2-1.3; Lead Acid 1.2-1.4);
- Cp: is the capacity of the battery at a discharge rate of 1 Amp per hour;
- I: effective discharge current;
- t: discharge time.

It should also be remembered that not all the energy supplied to the storage battery is stored by the storage battery and made available for later use. Some of the energy is dissipated during charging, mainly due to the Joule effect. In fact, the storage battery opposes an internal "resistance" on charge, which dissipates electric power into heat in proportion to the square of the current intensity that passes through it.

With reference to lead (lead-acid, lead-gel, etc.) batteries, such resistance is not constant and varies while charging the battery depending on its state of charge. The internal resistance of the battery varies less depending on other conditions. It should also be noted that batteries with a greater length of service tend to show greater internal resistances to the charge.

Another aspect relates to estimating the state of charge (SOC) of the storage battery. With particular reference to lead storage batteries, these generally do not carry an indicator of the state of charge built into the battery. Therefore, a charging system that wanted to base the charge curve of the storage battery on the charge level when connected to the battery charger should first have a method for estimating the state of charge of the battery. In this regard and still with reference to lead (lead-acid, lead-gel) batteries, there is generally a relation between the voltage of the storage battery cell and the state of charge. In the case of lead-acid batteries, in general the voltage ranges from 1.95 V for each single cell with 10% SOC to 2.15 V for SOCs close to 100%.

In case of lithium storage batteries, the issue varies depending on the type of electrochemistry used.

The document CN101944760A depicts a constant-power recharging system with the purpose of charging the battery as quickly as possible and delivering the maximum power that can be delivered by the converter, without indications of how to optimise the energy consumption and minimise the battery heating or estimate the state of charge.

The document WO2015081868 depicts a method of charging the battery of an electronic device. The method preselects at least two current values and comprises the step of acquiring a target charging time input by a user. The method also comprises reading from an indicator an amount of residual electric charge of a battery and, on the basis of this piece of data, choose the current value so that the time taken to charge the battery from the remaining electrical amount to the full electrical amount is less than or equal to a target recharging time.

This method has the disadvantage that it cannot be used on batteries that do not have an indicator of the state of charge, as generally occurs for example for storage batteries commonly used for industrial traction. Moreover, the charge at constant current intensity has some disadvantages both in terms of energy and of completeness of the charge compared to other solutions. Therefore, the Applicant has set the purpose of solving the above-mentioned technical problems through a method of charging storage batteries for traction in the industrial field, which allows to improve the energy efficiency and the charge completeness compared to known charging methods, and to extend the life of storage batteries.

A further object of the invention is to provide a practical and cheap solution to the above-mentioned problems.

BRIEF DESCRIPTION OF THE INVENTION

Such purposes are achieved by a method of charging storage batteries for traction in the industrial field, where the aforesaid method comprises at least the following steps:

a) providing a storage battery to be charged;
b) making an estimate of the state of initial charge of said storage battery;
c) charging said storage battery at constant power, by calculating said power depending on the estimate of the initial charging energy in which said storage battery is and in such a way as to complete the charge in a pre-set period of time T.

The advantages of this method include significant improvements in energy efficiency, in charge completeness and in longer life of storage batteries.

In order to better understand said technical advantages, please note that with commercially available charging systems typically a standard battery charger delivers the constant current intensity until a pre-set battery voltage level is reached. Such constant current intensity is typically the maximum one that can be delivered by the battery charger at the end-of-charge voltage.

With the constant power charging algorithm proposed, the current intensity supplied to the storage battery is not constant but decreasing over time since the battery voltage increases as the charge level increases. Moreover, the power delivered will not be the maximum one that can be delivered by the battery charger but is modulated in such a way as to reach the end-of-charge level in the pre-set time.

Please also note that, as explained previously, traction storage batteries are often charged without them being fully discharged.

In general, therefore, the proposed charging algorithm, calculating the charging power depending on the initial state of charge of the battery, will result in a lower charge rate and, consequently, a lower average charge intensity.

Please also note that $Pdiss = \int R * I(t)^2 \, dt$. The power dissipated in Joule effect on a resistive load over a time interval is therefore proportional to the square of the current. On the other hand, the time necessary to charge a storage battery is inversely proportional to the average charge intensity. As a result, a slower charge allows less Joule-effect energy to be dissipated. This has positive effects on both energy efficiency and protection of batteries. In fact, less power dissipated and along a longer time span results in lower temperatures during charging.

Furthermore, please note that for lead batteries the internal resistance on charge tends to be lower with lower charge levels (SOC), whereas it tends to be higher in the final charging steps. A constant-power algorithm allows to deliver more intensity in the initial step, when the resistance is lower, and less intensity in the final charging step, when the resistance is higher. This allows further optimisation of the process.

Therefore, other conditions being equal (charging time, amount of energy to be replenished, battery state, etc.) a constant power charge will dissipate less energy in the Joule effect compared to a constant intensity charge. A second benefit related to making constant-power charges compared to constant-intensity charges is the tendency to be able to have a more complete charge if the final step has lower current intensities.

As far as energy efficiency is concerned, in fact, the Applicant has observed that with the method according to the present invention, the storage battery is recharged in a longer time span, which allows to have a lower average charge intensity and therefore a lower total energy dissipated on internal resistance.

As regards, instead, the charge completeness, the Applicant has found that the method according to the present invention allows to have a more progressive charge of the storage battery which, due to the Peukert's effect, results in more complete charge levels.

Finally, as regards the longer life of the battery, the Applicant has found that the method according to the present invention allows the storage batteries to be charged at lower temperatures with consequent decrease in the ageing rate of the same storage battery.

The charge level estimate proposed is made alternatively on the basis of the open-circuit voltage detected by the battery charger at the beginning of the charge or through a suitable control board installed on the battery. Such board measures the amount of energy absorbed by the same battery.

Further characteristics of the invention can be deduced from the dependent claims.

BRIEF DESCRIPTION OF THE FIGURES

Further characteristics and advantages of the invention will become clear from reading the following description provided by way of non-limiting example, with the aid of the figures depicted in the accompanying drawings, wherein:

- figure 1 shows schematically the main components of a charging system configured to implement the method according to the present invention;

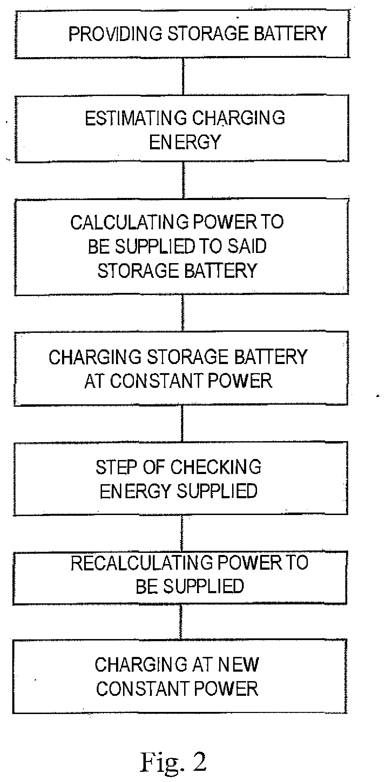

- figure 2 shows a block diagram of the method according to the present invention; and
- figure 3 is a graph of the correlation between the open-circuit voltage (OCV) and the state of charge (SOC) of a storage battery.

DETAILED DESCRIPTION OF THE FIGURES

The present invention will now be described with particular reference to the accompanying figures.

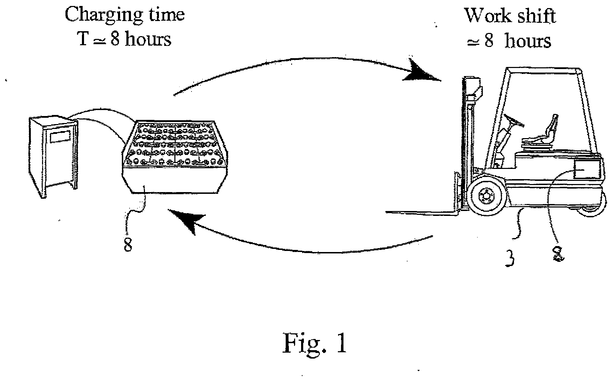

In particular, figure 1 depicts a diagram of the main components of the system for charging storage batteries, which is configured to implement the method according to the present invention, where for the application of the method, the use of at least one charger and a series of storage batteries, which are used on lift trucks in the industrial field, is provided.

Typically, a traction battery used for lift trucks or forklifts in the industrial field, is commonly used for a work shift (for example, 8 hours). At the end of such shift, the storage battery of the lift truck or forklift used (batt. A) is replaced with a charged storage battery (batt. B) and the one used at the previous shift (batt A) is charged. Such storage battery (batt. A) will have a time period corresponding to one or two work shifts to recharge. In fact, it must be re-mounted on the lift truck 3 only at the beginning of the next shift.

The storage batteries 8 shown in figure 1 are preferably lead storage batteries.

In general, therefore, the invention relates to a method of charging storage batteries 8 for traction in the industrial field, where the aforesaid method comprises at least the following steps:

a) providing a storage battery 8 to be charged;
b) making an estimate of the initial charging energy of said storage battery 8;
c) charging said storage battery 8 at constant power, by calculating said power depending on the estimate of the initial charging energy in which said storage battery 8 is and in such a way as to complete the charge in a pre-set period of time T.

To complete the charge of the storage battery for the purposes of the present description, it is understood that the storage battery is brought to a state of charge SOC level of at least 80%.

Preferably, the method is applied to lead storage batteries, such as lead-acid, lead-gel, lead-carbon storage batteries, but could be applied to other types of storage batteries without departing from the protection scope of the present invention.

The method starts, therefore, by providing a storage battery 8 to be recharged, i.e. a storage battery 8 which has finished a work cycle and has for example been disassembled from a forklift 3 after a shift of at least 5/6 hours of time.

The initial charging energy in which the storage battery 8 is, is then estimated. The energy estimate is closely related to the value of the state of charge SOC in which the storage battery is at the initial instant SOCt0. The state of charge in which the storage battery is at the initial instant SOCt0 is estimated depending on the open-circuit voltage.

At this point, the constant power to be supplied to the storage battery 8 to bring it to full charge is calculated depending on the estimate of the initial state of charge in which the storage battery is, i.e. depending on SOCto, where to is the initial instant, and in such a way as to complete the charge in a pre-set period of time T, for example in a period of time T which may be 5/6 hours, i.e., on average, one work shift.

It should be noted, in fact, that the voltage of a storage battery, with some limits, is a value correlated to the value of the state of charge SOC of the storage battery and, therefore, the voltage value allows you to roughly estimate, the other parameters being equal, the SOC value of the storage battery and, consequently, the initial charging energy.

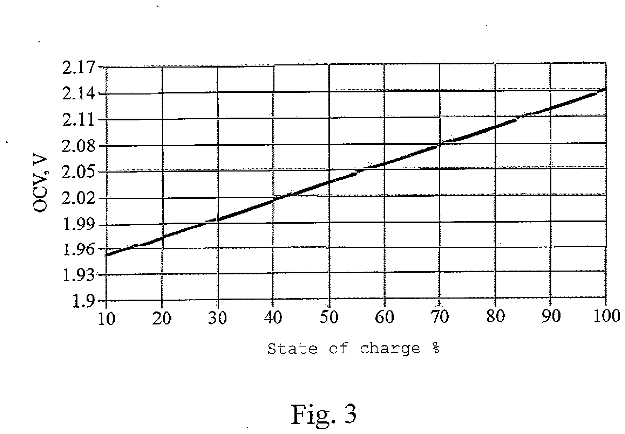

For example, figure 3 depicts a graph showing the correlation between the open-circuit voltage (OCV) and the state of charge (SOC).

At this point, the charging power at which the storage battery is to be recharged is calculated by taking into account, according to the following correlations:

$$\texttt{Pcharge = Esupply / Pre-set time,}$$

where

Pcharge is said charging power value;
Esupply is the value of necessary energy to supply in order to obtain the desired charge, thus considering also the dissipated energy, i.e.

$$\texttt{Esupply = Echarge+Ediss,}$$

where
Esupply is the necessary energy to complete the charge and Ediss is the Joule-effect dissipated energy due to the internal resistance of the storage battery.

For example, in the event that said storage battery is at a SOC charge level of 20% (discharge at 80%), said Echarge value will be 80% of the total energy that can be stored by the storage battery; in the event that the storage battery is at a SOC charge level of 70% (discharge at 30%), said Echarge value will be 30% of the total energy that can be stored by the storage battery.

Therefore, the storage battery is charged at constant power, by calculating said power depending on the estimate of the initial charging energy in which the storage battery is and in such a way as to complete the charge in a pre-set period of time T.

In order to ensure that there is as little as possible deviation between the energy to be supplied and that absorbed by the storage battery in the pre-set time period T and therefore subsequent higher or more complete charge levels, at least one checking step is carried out at a time ti, in which ti is a time instant between 0 and T.

In said at least one checking step, the charging energy that is still necessary to be supplied to the storage battery is recalculated to bring it substantially to the full-charge value in the pre-set time period T.

Preferably, the method comprises a plurality of steps of checking the charging energy that is still necessary to be supplied to said storage battery to bring it substantially to the full charge value in the pre-set time period T.

In other words, at regular time intervals, for example every 30 minutes, a checking step is performed, where the amount of energy supplied to the storage battery and the increase in the SOC charge level obtained are evaluated.

In this stage, the internal resistance of the storage battery is also recalculated.

In fact, since the energy supplied to the storage battery is known up to the time of the check, additional energy stored in the storage battery can be used to estimate by difference the energy dissipated up to the instant of the check and consequently of st. The constant power value at which to recharge the battery is then recalculated, as at the beginning of the method, however, by using the SOC charge level and resistance values updated in this checking step.

The checking steps and subsequent corrections are repeated at regular intervals until the end of the charging period.

Regarding the pre-set time period in which charging is to be completed, it should be noted that it is a time set by the user. Two pre-set options of particular interest could be a period of 6 hours per charge (followed by an electrolyte mixing step) substantially equivalent to a shift of non-use of the storage battery, or a period of 14 hours (followed by an electrolyte mixing step), substantially equivalent to two shifts of non-use of the storage battery.

To take into account any possible unexpected/unconsidered factors, the power value may be increased by a factor to ensure completion of the charge in the pre-set time period. Preferably, the power value PC is increased by a factor greater than 1.

Therefore, the following advantages result from the new method:

- Better energy efficiency: by performing a charge over a longer time span, it is in fact possible to use a lower average charge intensity and, therefore, lower total energy dissipated in Joule effect due to the internal resistance.
- More complete charges; the Peukert's effect implies, in fact, that a more progressive charge allows to reach more complete charge levels of the storage battery; this is particularly important in the case of "older" storage batteries that therefore reach with difficulty SOC charge levels close to 100% at the end of the charge.
- Longer life of the storage batteries; if the storage battery operates at higher temperatures, the ageing rate in fact increases due to phenomena related to the Arrhenius effect.

A further variant embodiment of the present invention is as follows.

The first time a battery charger is used on a storage battery, the battery charger makes a full mapping of the open-circuit voltage of the storage battery depending on its charge level.

This mapping is carried out as follows.

a. firstly, the battery charger is supplied with a charged storage battery with a known SOC state of charge (e.g. 20%);
b. the battery charger charges the storage battery up to 100% SOC by interrupting the charge at regular charge intervals to measure the open-circuit voltage;
c. For each cycle, or charge interval, the battery charger stores the total energy supplied during each charge interval and the open-circuit voltage level is measured at the end of each charge interval;
d. the total value of the energy supplied is calculated by deducting an estimated value of the amount of energy dissipated due to the Joule effect;
e. the initial state of charge (e.g. 20%) being known, the total energy supplied to the storage battery at each step of the cycle being known, i.e. at the various charging intervals, and the open-circuit voltage at the end of each cycle being known, a table is built, which correlates the total energy stored by the battery for each charge interval with the respective open-circuit voltage value, in order to obtain a complete mapping of the open-circuit voltage of the aforesaid storage battery depending on its charge level.

This reconstruction is only to be carried out the first time a specific battery or storage battery is connected to the battery charger. Such method allows to improve the estimation of the initial state of charge of the storage battery depending on the open-circuit voltage. Such estimate is better because it is not based on average data but detected directly on the specific storage battery to be charged and therefore less subject to variability from other conditions and characteristics.

A further method for estimating the initial state of charge, according to an embodiment of the present invention, is as follows.

A board, which is an electronic device for measuring and storing the current intensity and the voltage produced by the storage battery, is mounted on the storage battery.

a. starting from a fully charged storage battery, during the discharging step, the board detects the total energy supplied by the storage battery;
b. once the storage battery is charged, the board supplies the battery charger with such value of energy to be replenished on the storage battery;
c. the battery charger replenishes the request by adding to the required value an amount of energy equal to the estimated amount of energy dissipated due to the Joule effect during the step of discharging and the step of charging the storage battery.

Obviously, modifications or improvements that are dictated by contingent or particular reasons, without thereby departing from the scope of the invention, may be made to the invention as described herein.

**Claims**

1. Method of charging storage batteries for traction in the industrial field, where the aforesaid method comprises at least the following steps:

a) providing a storage battery (2) to be charged;

b) making an estimate of the state of initial charge of said storage battery (2);

c) charging said storage battery at constant power, by calculating said power depending on the estimate of the initial charging energy in which said storage battery (2) is and in such a way as to complete the charge in a pre-set period of time T.

2. Method of charging according to claim 1, **characterised by** further comprising, at a ti time where ti is a time instant between 0 and T, at least one checking step to determine the amount of charging energy that is still necessary to supply to said storage battery to bring it substantially to the full charge value in said pre-set time period T.

3. Method of charging according to claim 2, **characterised in that** during said at least one checking step, an estimate is carried out of the state of charge (SOCti) in which said storage battery (2) is at ti time, if the charge level (SOCti), at which said storage battery (2) is, is less than the theoretical charge level (SOCtheo) at which the storage battery should be in ti said storage battery is charged at constant power, said constant power is recalculated depending on the charge level (SOCti) at which said storage battery is and in such a way as to complete the charge in a pre-set period of time T.

4. Method of charging according to claim 1, **characterised by** comprising a plurality of checking steps for determining the charging energy that it is still necessary to supply to said storage battery to bring it to a charge level equal to 100% in said pre-set period of time T.

5. Method according to any one of claims 1 to 4, **characterised in that** in said at least one checking step, the amount of charging energy to be supplied to said storage battery depends on the charge level (SOCti) at which said storage battery is at ti time, and on the internal resistance of said storage battery (2).

6. Method according to claim 5, **characterised by** comprising at least one step of estimating the internal resistance of said storage battery (2).

7. Method according to claim 6, **characterised in that** said step of estimating the internal resistance of said storage battery (2) is based on the detection of the internal impedance of said storage battery (2).

8. Method according to claim 7, **characterised in that** said internal impedance of said storage battery is detected by means of voltage sinusoidal stresses.

9. Method according to any one of claims 1 to 8, **characterised in that** said constant charging power (Cp) is calculated Cp = Esupply / Pre-set time;
where:

- Cp is said charging power value;
- Esupply = Echarge+Ediss, where Esupply is the energy necessary to complete the charge and Ediss is the energy dissipated due to the internal resistance of the battery;
- Pre-set time is the time to complete the charge.

10. Method according to claim 9, **characterised in that** said calculated power Cp is increased by a factor greater than 1.

11. Method of charging according to claim 1, **characterised in that** the aforesaid step of estimating the initial state of charge of said storage battery (2) comprises a complete mapping of the open-circuit voltage of the aforesaid storage battery depending on its charge level.

12. Method of charging according to claim 11, **characterised by** comprising the following steps:

- providing a storage battery having a known state of charge;
- discharging the storage battery to a state of charge (e.g. SOC of 20%;
- during the step of charging the storage battery, interrupting the charge at regular charging intervals to measure the open-circuit voltage;
- storing, for each of the aforesaid charge intervals, the total energy supplied during the aforesaid charge interval and the open-circuit voltage level measured at the end of the aforesaid charge interval, where the total value of the energy supplied is calculated by deducting an estimated value of the amount of energy dissipated due to the Joule effect;
- constructing a table, which correlates the total energy stored by the battery for each charge interval with the respective open-circuit voltage value, in order to obtain a complete mapping of the open-circuit voltage of the aforesaid storage battery depending on its charge level.

**13.** Method of charging according to claim 1, **characterised in that** the aforesaid step of estimating the initial state of charge of said storage battery (2) comprises the following steps:

- providing an electronic device for measuring and storing the current intensity and the voltage produced by the aforesaid storage battery;
- fully charging the storage battery;
- measuring the total energy supplied by the storage battery by using the aforesaid electronic measuring device;
- recharging the aforesaid storage battery, where at the beginning of the recharging step, the aforesaid electronic measuring device provides the value of energy required to be replenished on the aforesaid storage battery;
- replenishing the required energy by adding to the required value an amount of energy equal to the estimated amount of energy dissipated due to the Joule effect during the step of discharging and the step of charging the storage battery.

Charging time
T ≃ 8 hours

Work shift
≃ 8 hours

Fig. 1

```
┌─────────────────────────────────┐
│     PROVIDING STORAGE BATTERY    │
└─────────────────────────────────┘
                 │
┌─────────────────────────────────┐
│       ESTIMATING CHARGING        │
│             ENERGY               │
└─────────────────────────────────┘
                 │
┌─────────────────────────────────┐
│      CALCULATING POWER TO        │
│       BE SUPPLIED TO SAID        │
│         STORAGE BATTERY          │
└─────────────────────────────────┘
                 │
┌─────────────────────────────────┐
│    CHARGING STORAGE BATTERY      │
│       AT CONSTANT POWER          │
└─────────────────────────────────┘
                 │
┌─────────────────────────────────┐
│        STEP OF CHECKING          │
│        ENERGY SUPPLIED           │
└─────────────────────────────────┘
                 │
┌─────────────────────────────────┐
│     RECALCULATING POWER TO       │
│          BE SUPPLIED             │
└─────────────────────────────────┘
                 │
┌─────────────────────────────────┐
│        CHARGING AT NEW           │
│        CONSTANT POWER            │
└─────────────────────────────────┘
```

Fig. 2

Fig. 3

Europäisches Patentamt

European Patent Office

Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 101 944 760 A (GUANGDONG APOWER ELECTRONICS CO LTD ET AL.) 12 January 2011 (2011-01-12) * paragraph [0026] * * figures 1-6 * | 1-13 | INV. H02J7/04 B60L58/12 |
| A | WO 2015/081868 A1 (HUAWEI DEVICE CO LTD [CN]) 11 June 2015 (2015-06-11) * page 25, line 30 - page 26, line 7 * * page 41, line 16 - line 23 * | 1-13 | |
| A | EP 2 530 478 A2 (GS YUASA INT LTD [JP]) 5 December 2012 (2012-12-05) * paragraph [0059] - paragraph [0064] * | 1-13 | |
| A | US 2019/241088 A1 (KIMURA MASARU [JP]) 8 August 2019 (2019-08-08) * paragraph [0069] - paragraph [0079] * | 1-13 | |
| A | WO 2017/034950 A1 (THE PAPER BATTERY COMPANY INC [US]) 2 March 2017 (2017-03-02) * paragraph [0027] - paragraph [0028] * * figure 6A * | 1-13 | TECHNICAL FIELDS SEARCHED (IPC) H02J B60L |

The present search report has been drawn up for all claims

| Place of search | Date of completion of the search | Examiner |
|---|---|---|
| The Hague | 30 March 2021 | Marín Saldaña, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 6717

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2021

| Patent document cited in search report | | Publication date | Patent family member(s) | | Publication date |
|---|---|---|---|---|---|
| CN 101944760 | A | 12-01-2011 | NONE | | |
| WO 2015081868 | A1 | 11-06-2015 | CN | 103682498 A | 26-03-2014 |
| | | | WO | 2015081868 A1 | 11-06-2015 |
| EP 2530478 | A2 | 05-12-2012 | CN | 102809730 A | 05-12-2012 |
| | | | EP | 2530478 A2 | 05-12-2012 |
| | | | JP | 6044114 B2 | 14-12-2016 |
| | | | JP | 2013011590 A | 17-01-2013 |
| | | | KR | 20120135075 A | 12-12-2012 |
| | | | US | 2012306436 A1 | 06-12-2012 |
| US 2019241088 | A1 | 08-08-2019 | CN | 110126657 A | 16-08-2019 |
| | | | JP | 2019140774 A | 22-08-2019 |
| | | | US | 2019241088 A1 | 08-08-2019 |
| WO 2017034950 | A1 | 02-03-2017 | US | 2017063106 A1 | 02-03-2017 |
| | | | WO | 2017034950 A1 | 02-03-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101944760 A
- WO 2015081868 A